# EUROPÄISCHE PATENTSCHRIFT

(11) **EP 3 684 537 B1**
(45) Veröffentlichungstag und Bekanntmachung des Hinweises auf die Patenterteilung: **06.07.2022**
(21) Anmeldenummer: 18795672.7
(22) Anmeldetag: 06.11.2018
(51) Int. Cl.: B23K 9/067, H02M 3/00

(54) **VERFAHREN ZUR BERÜHRUNGSLOSEN ZÜNDUNG EINES LICHTBOGENS UND SCHWEISSSTROMQUELLE ZUR DURCHFÜHRUNG EINES ZÜNDVERFAHRENS**
METHOD FOR CONTACTLESS IGNITION OF AN ARC AND WELDING POWER SOURCE FOR CARRYING OUT AN IGNITION METHOD
PROCÉDÉ D'AMORÇAGE SANS CONTACT D'UN ARC ÉLECTRIQUE ET SOURCE DE COURANT DE SOUDAGE POUR LA MISE EN OEUVRE D'UN PROCÉDÉ D'AMORÇAGE

(30) Priorität: 08.11.2017 EP 17200599
(43) Veröffentlichungstag der Anmeldung: 29.07.2020
(73) Patentinhaber: Fronius International GmbH, 4643 Pettenbach (AT)
(72) Erfinder: MUSIL, Franz Peter, 4643 Pettenbach (AT); PRINZ, Andreas, 4643 Pettenbach (AT)
(74) Vertreter: SONN Patentanwälte OG
(86) Internationale Anmeldenummer: PCT/EP2018/080223
(87) Internationale Veröffentlichungsnummer: WO 2019/091934

(56) Entgegenhaltungen:
- EP-A1- 2 216 124
- WO-A1-97/01211
- WO-A1-2016/142218
- US-A- 5 117 088
- US-A1- 2014 251 968

## Beschreibung

Die Erfindung betrifft ein Verfahren zur berührungslosen Zündung eines Lichtbogens zwischen einer Elektrode und einem zu verschweißenden Werkstück zur Durchführung eines Schweißverfahrens, wobei ein Schweißstrom und eine Schweißspannung an einem Ausgang einer Schweißstromquelle bereitgestellt werden, wobei die Schweißstromquelle einen Resonanzkonverter zur Erzeugung einer sich periodisch ändernden, im Wesentlichen sägezahnförmigen, Leerlaufschweißspannung mit periodisch mit einer Wiederholfrequenz wiederkehrenden Spannungsmaxima beinhaltet.

Die Erfindung betrifft weiters eine Schweißstromquelle zur Bereitstellung eines Schweißstroms und einer Schweißspannung an einem Ausgang zur Durchführung eines Schweißverfahrens mit einem Lichtbogen zwischen einer Elektrode und einem zu verschweißenden Werkstück, mit einem Resonanzkonverter zur Erzeugung einer sich periodisch ändernden, im Wesentlichen sägezahnförmigen, Leerlaufschweißspannung mit periodisch mit einer Wiederholfrequenz wiederkehrenden Spannungsmaxima.

Die vorliegende Erfindung betrifft ein Zündverfahren und eine Schweißstromquelle zur Durchführung eines Zündverfahrens für die Schweißtechnik, wobei sowohl Schweißverfahren mit abschmelzender Elektrode, wie z.B. MIG (Metall-Inertgas)- oder MAG (Metall-Aktivgas)-Schweißverfahren, als auch Schweißverfahren mit nicht abschmelzender Elektrode, wie z.B. WIG (Wolfram-Inertgas)-Schweißverfahren, denkbar sind.

Zum berührungslosen Zünden des für das Schweißverfahren notwendigen Lichtbogens zwischen der Elektrode und dem zu verschweißenden Werkstück ist eine hohe Spannung von Vorteil. Aus Gründen der Sicherheit ist jedoch die dauerhaft zugelassene maximale Leerlaufschweißspannung am Ausgang einer Schweißstromquelle üblicherweise normativ begrenzt.

Man ist daher dazu bestrebt die Schweißstromquellen so auszubilden, dass einerseits die Sicherheitsvorschriften erfüllt werden und andererseits ein sicheres Zünden des Lichtbogens gewährleistet wird. Hierzu gibt es verschiedene Methoden welche zum Teil einen erheblichen Schaltungsaufwand beinhalten, der nicht nur die Kosten einer Schweißstromquelle erhöhen, sondern auch die Baugröße, da die Schaltungen zur Verbesserung des Zündverhaltens einen beträchtlichen Teil der Schweißstromquelle einnehmen können.

Beispielsweise werden bei Schweißstromquellen des Standes der Technik Hilfsspannungsquellen verwendet, um die Ausgangsspannung anzuheben und eine Zündung des Lichtbogens zu ermöglichen.

So ist beispielsweise aus der WO 2005/051585 A1 oder der US 5,117,088 A bekannt zum berührungslosen Zünden Hochfrequenzpulse auf die Schweißspannung einzukoppeln.

Die US 2014/0251968 A1 (welche die Basis für den Oberbegriff von Anspruch 1 darstellt) beschreibt ein Schweißsystem mit einer Hochfrequenzzündung zum Wiederzünden des Lichtbogens bei einem AC-Schweißprozess, wobei eine Regelungseinrichtung vorgesehen ist, welche die Zündung in Abhängigkeit des vorgesehenen Schweißverfahrens aktiviert.

Die DE 16 15 363 A1 und DE 24 49 557 B1 beschreiben Schweißstromquellen, bei welchen ein Zündstromimpuls kurz vor dem Spannungsmaximum der Leerlaufspannung gezündet wird.

Die vorliegende Erfindung ist auf ein oben genanntes Zündverfahren und eine oben genannte Schweißstromquelle zur Durchführung eines Zündverfahrens gerichtet, bei der ein Resonanzkonverter zur Erzeugung einer sich periodisch ändernden, im Wesentlichen sägezahnförmigen, Leerlaufschweißspannung mit periodisch mit einer Wiederholfrequenz wiederkehrenden Spannungsmaxima beinhaltet.

Resonanzkonverter sind elektrische Schaltungen, welche auf Resonanz mit einer bestimmten Resonanzfrequenz beruhen. Üblicherweise werden Impulse mit einer Frequenz nahe dieser Resonanzfrequenz angelegt und dadurch der Resonanzkreis mit der Resonanzfrequenz angeregt, wodurch eine sich periodisch ändernde Ausgangsspannung resultiert. Beispielsweise beschreibt die WO 2016/142218 A1 einen Resonanzwandler mit entsprechenden kapazitiven und induktiven Bauelementen, der auch in einer Stromquelle für ein Schweißgerät Anwendung finden kann.

Die Aufgabe der vorliegenden Erfindung besteht darin, ein oben genanntes Verfahren und eine oben genannte Schweißstromquelle zu schaffen, welche ein sicheres Zünden des Lichtbogens gewährleisten aber einen möglichst geringen Aufwand verursachen, um eine wirtschaftliche Anwendung auch bei den oben genannten kostengünstigen Schweißstromquellen mit Resonanzkonvertern zur Erzeugung einer sich periodisch ändernden Leerlaufspannung zu ermöglichen. Nachteile bekannter Verfahren sollen vermieden oder zumindest reduziert werden.

Gelöst wird die erfindungsgemäße Aufgabe in verfahrensmäßiger Hinsicht dadurch, dass der Resonanzkonverter durch einen Serien-Parallel-Resonanzkonverter gebildet wird, und dass der Leerlaufschweißspannung im Bereich zumindest mancher periodisch wiederkehrender Spannungsmaxima der Leerlaufschweißspannung zeitlich synchron Hochfrequenzpulse überlagert werden. Das vorliegende Verfahren sieht also vor, die Hochfrequenzpulse zeitlich synchron mit zumindest manchen Spannungsmaxima der sich periodisch ändernden Leerlaufschweißspannung zu überlagern, wodurch bestmögliche Zündeigenschaften erreicht werden können. Ein durch einen Serien-Parallel-Resonanzkonverter gebildeter Resonanzkonverter als Teil der Schweißstromquelle ist besonders einfach und somit kostengünstig sowie platzsparend aufgebaut. Aufwändige Schaltungen zur Erhöhung der Zündspannung, wie z.B. Spannungsverdopplerschaltungen oder andere Hilfsschaltungen, sind nicht notwendig, weshalb der Aufwand für die Durchführung des Verfahrens sehr gering gehalten werden kann. Dadurch, dass die Hochfrequenzpulse zeitlich synchron dem Spannungsmaxima der Leerlaufschweißspannung überlagert werden, können die Zündeigenschaften verbessert werden und gleichzeitig geltende Sicherheitsvorschriften eingehalten werden. Dadurch, dass die Hochfrequenzpulse nicht zwingend jedem Spannungsmaximum der Leerlaufschweißspannung überlagert werden müssen, kann die mittlere dauerhaft anliegende Leerlaufschweißspannung unterhalb normativer Grenzwerte gehalten werden.

Mit der Aussage, dass die Hochfrequenzpulse im Bereich des Spannungsmaximums überlagert werden soll zum Ausdruck gebracht werden, dass die Hochfrequenzpulse nicht exakt zum Zeitpunkt des Auftretens des Spannungsmaximums überlagert werden müssen, sondern dies in einem Bereich vor oder nach Auftreten des Spannungsmaximums erfolgen kann. Erfahrungsgemäß ist eine Überlagerung der Hochfrequenzpulse im Bereich des Spannungsmaximums bzw. 90% des Spannungsmaximums optimal bzw. ausreichend.

Vorteilhafterweise werden der Leerlaufschweißspannung im Bereich jedes n-ten Spannungsmaximums der Leerlaufschweißspannung zeitlich synchron Hochfrequenzpulse überlagert, wobei n eine ganze positive Zahl größer oder gleich 1 ist. Durch entsprechende Wahl der Zahl n kann einerseits die im Mittel am Ausgang der Schweißstromquelle übertragene Energie limitiert werden, um die Sicherheitsvorschriften einhalten zu können, und andererseits auch darauf Rücksicht genommen werden, dass die Erzeugung der Hochfrequenzpulse durch das Aufladen entsprechender Speicherbauelemente, wie Kondensatoren, eine gewisse Zeit benötigt.

Gemäß einem weiteren Merkmal der Erfindung wird die Schweißspannung gemessen und das Überschreiten eines vorgegebenen Spannungswerts detektiert und es werden die Hochfrequenzpulse zumindest manchen detektierten vorgegebenen Spannungswerten zeitlich synchron überlagert. Durch die zusätzliche Messung der Leerlaufschweißspannung kann die zeitliche Synchronität der Überlagerung der Hochfrequenzpulse mit zumindest manchen Spannungsmaxima verbessert werden, da die realen Bedingungen berücksichtigt werden. Durch die Einstellung des vorgegebenen Spannungswerts im Bereich der zu erwartenden Spannungsmaxima kann der Zeitpunkt des Auftretens der Spannungsmaxima sehr zuverlässig festgestellt werden und der Hochfrequenzpuls dem Spannungsmaximum zeitlich synchron überlagert werden.

Die Hochfrequenzpulse können um eine vorgegebene Zeitspanne, vorzugsweise bis 5ms, vor oder nach Auftreten des Spannungsmaximums überlagert werden. Wie bereits oben erwähnt muss das Überlagern der Hochfrequenzpulse nicht exakt im Zeitpunkt des Spannungsmaximums vorgenommen werden, sondern kann auch in einem Bereich davor bzw. danach stattfinden, ohne dass die Zündeigenschaften wesentlich verschlechtert werden. Bei üblichen Zündverfahren haben sich Verzögerungen im Bereich zwischen 0 und 5ms als geeignet herausgestellt.

Vorteilhafterweise wird eine Leerlaufschweißspannung mit einer Wiederholfrequenz zwischen 10Hz und 100Hz, insbesondere 33Hz, zur Verfügung gestellt. Diese Frequenzbereiche stellen geeignete Werte bei Schweißstromquellen dar.

Idealerweise werden Hochfrequenzpulse mit einer Frequenz zwischen 100kHz und 10MHz überlagert. Hochfrequenzpulse mit einer derartigen Frequenz weisen eine Amplitude von mehreren kV auf, um die Zündstrecke für die Zündung ausreichend zu ionisieren. Gelöst wird die erfindungsgemäße Aufgabe auch durch eine oben genannte Schweißstromquelle, bei welcher der Resonanzkonverter durch einen Serien-Parallel-Resonanzkonverter gebildet ist, und eine Schaltung zur Erzeugung von Hochfrequenzpulsen vorgesehen ist, welche Schaltung zum berührungslosen Zünden des Lichtbogens zur Überlagerung der Hochfrequenzpulse zu der Leerlaufschweißspannung zeitlich synchron im Bereich zumindest mancher periodisch wiederkehrender Spannungsmaxima der Leerlaufschweißspannung ausgebildet ist. Eine derartige Schweißstromquelle zeichnet sich durch einen relativ einfachen und kostengünstig herstellbaren Aufbau und geringe Baugröße aus. Zu den weiteren dadurch erzielbaren Vorteilen wird auf die obige Beschreibung des erfindungsgemäßen Verfahrens verwiesen. Vorteilhafterweise ist die Schaltung zur Erzeugung der Hochfrequenzpulse zur zeitlich synchronen Überlagerung der Hochfrequenzpulse der Leerlaufschweißspannung im Bereich jedes n-ten Spannungsmaximums der Leerlaufschweißspannung ausgebildet, wobei n eine ganze positive Zahl größer oder gleich 1 ist. Wie bereits oben erwähnt ist es nicht zwingend erforderlich bei jedem Spannungsmaximum der Leerlaufschweißspannung entsprechende Hochfrequenzpulse zu überlagern um eine sichere und geeignete Zündung des Lichtbogens gewährleisten zu können.

Gemäß einem weiteren Merkmal der Erfindung ist eine Messeinrichtung zur Detektion der Schweißspannung vorgesehen, welche Messeinrichtung über eine Regelungseinrichtung mit der Schaltung zur Erzeugung der Hochfrequenzpulse verbunden ist, sodass die Hochfrequenzpulse zeitlich synchron mit den detektierten definierten Spannungswerten überlagerbar sind. Die Messeinrichtung kann durch eine üblicherweise vorhandene Einrichtung zur Überwachung der Schweißspannung gebildet werden, sodass keine zusätzliche Hardware erforderlich ist.

Weiters kann die Schaltung zur Erzeugung der Hochfrequenzpulse zur zeitlich um eine vorgegebene Zeitspanne, vorzugsweise bis 5ms, vor oder nach Auftreten des Spannungsmaximums versetzten Überlagerung der Hochfrequenzpulse ausgebildet sein. Vorteilhafterweise ist die Schaltung zur Erzeugung der sich periodisch ändernden Leerlaufschweißspannung mit einer Wiederholfrequenz zwischen 10Hz und 100Hz, insbesondere 33Hz, ausgebildet.

Idealerweise ist die Schaltung zur Erzeugung von Hochfrequenzpulsen zwischen 100kHz und 10MHz ausgebildet.

Die Elektrode kann durch eine nichtabschmelzende Elektrode, insbesondere eine Wolframelektrode, gebildet sein. Insbesondere bei WIG-Schweißverfahren mit nichtabschmelzender Wolframelektrode stellt die berührungslose Zündung des Lichtbogens bei geringen Leerlaufspannungen eine besondere Herausforderung dar.

Die vorliegende Erfindung wird anhand der beigefügten Zeichnungen näher erläutert. Darin zeigen:
- Fig. 1: ein Blockschaltbild einer Schweißstromquelle ;

- Fig. 2: ein Blockschaltbild einer weiteren Ausführungsvariante einer Schweißstromquelle gemäß der vorliegenden Erfindung;
- Fig. 3: den Zeitverlauf der Leerlaufschweißspannung einer Schweißstromquelle mit einem Resonanzkonverter;
- Fig. 4: den Zeitverlauf der Leerlaufschweißspannung bei Anwendung des erfindungsgemäßen Zündverfahrens;
- Fig. 5: den Zeitverlauf der Leerlaufschweißspannung bei einer Variante des erfindungsgemäßen Zündverfahrens; und
- Fig. 6: den Zeitverlauf der Leerlaufschweißspannung bei einer weiteren Variante des Zündverfahrens.

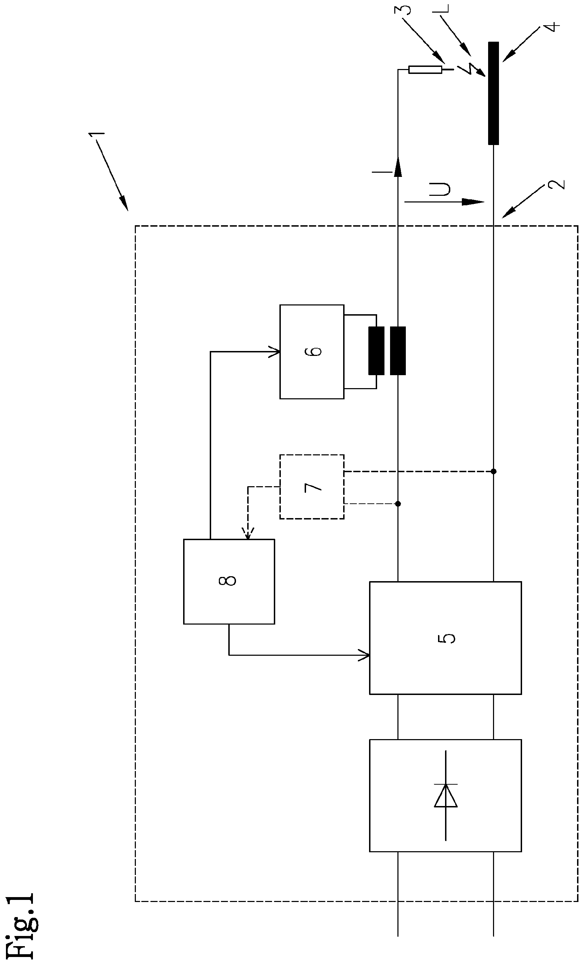

Fig. 1 zeigt ein Blockschaltbild einer Schweißstromquelle 1. Die Schweißstromquelle 1 dient zur Bereitstellung eines Schweißstroms I und einer Schweißspannung U an einem Ausgang 2 zur Durchführung eines Schweißverfahrens mit einem Lichtbogen L zwischen einer Elektrode 3 und einem zu verschweißendem Werkstück 4. Die Elektrode 3 kann eine nichtabschmelzende Elektrode, insbesondere Wolframelektrode, aber auch eine abschmelzende Elektrode sein. Die Schweißstromquelle 1 beinhaltet einen Resonanzkonverter 5 zur Erzeugung der Schweißspannung U. Der Resonanzkonverter 5 wird erfindungsgemäß durch einen Serien-Parallel-Resonanzkonverter gebildet .Derartige Schaltungen sind besonders einfach aufgebaut und werden bei einer Reihe von Schweißstromquellen 1 verwendet. Der Resonanzkonverter 5 ist über entsprechende Vorschaltungen, wie z.B. Gleichrichter oder dgl., mit dem Versorgungsnetz verbunden.

Zur berührungslosen Zündung des Lichtbogens L zwischen Elektrode 3 und Werkstück 4 ist eine Schaltung 6 zur Erzeugung von Hochfrequenzpulsen U_{I},_{HF} vorgesehen, welche Hochfrequenzpulse U_{I},_{HF} der Leerlaufschweißspannung U_{LL} am Ausgang 2 der Schweißstromquelle 1 überlagert werden und zwar zeitlich synchron im Bereich zumindest mancher der periodisch wiederkehrenden Spannungsmaxima U_{LL},ₘₐₓ der Leerlaufschweißspannung U_{LL}. Unter der Voraussetzung fester zeitlicher Parameter können die Zeitpunkte der periodisch wiederkehrenden Spannungsmaxima U_{LL},ₘₐₓ mit hinreichender Genauigkeit bestimmt werden und die Überlagerung der Hochfrequenzpulse U_{I},_{HF} hinreichend genau vorgenommen werden. Die Schaltung 6 zur Erzeugung von Hochfrequenzpulsen U_{I},_{HF} kann auch parallel zum Ausgang 2 bzw. Lichtbogen L angeordnet sein (nicht dargestellt).

Zur Verbesserung der zeitlichen Synchronität der Überlagerung kann eine Regelungseinrichtung 8 vorgesehen sein, welche die Schaltung 6 zur Erzeugung von Hochfrequenzpulsen U_{I},_{HF} entsprechend regelt. Optional kann eine Messeinrichtung 7 zur Detektion der Schweißspannung U vorgesehen sein, welche Messeinrichtung 7 mit der Regelungseinrichtung 8 verbunden ist, sodass die Hochfrequenzpulse U_{I},_{HF} zeitlich synchron mit detektierten definierten Spannungswerten U_{LL},_{def} am Ausgang 2 überlagerbar sind.

Dadurch, dass die Hochfrequenzpulse U_{I},_{HF} im Bereich der Spannungsmaxima U_{LL},ₘₐₓ der Leerlaufspannung U_{LL} überlagert werden, kann die Zündspannung erhöht werden und somit eine sichere Zündung des Lichtbogens L gewährleistet werden. Der zusätzliche Schaltungsaufwand ist minimal, weshalb die Schweißstromquelle 1 gegenüber herkömmlichen Schweißstromquellen nicht wesentlich größer und teurer ausgebildet sein muss. Die Hochfrequenzpulse U_{I},_{HF} können kurz vor oder kurz nach dem Auftreten des Maximums der Leerlaufspannung U_{LL},ₘₐₓ dieser überlagert werden. Die Hochfrequenzpulse U_{I},_{HF} müssen nicht bei jedem Spannungsmaximum U_{LL},ₘₐₓ überlagert werden, sondern nur bei einem Teil der Spannungsmaxima U_{LL},_{max,} beispielsweise nur bei jedem zweiten oder jedem dritten Spannungsmaximum U_{LL},ₘₐₓ.

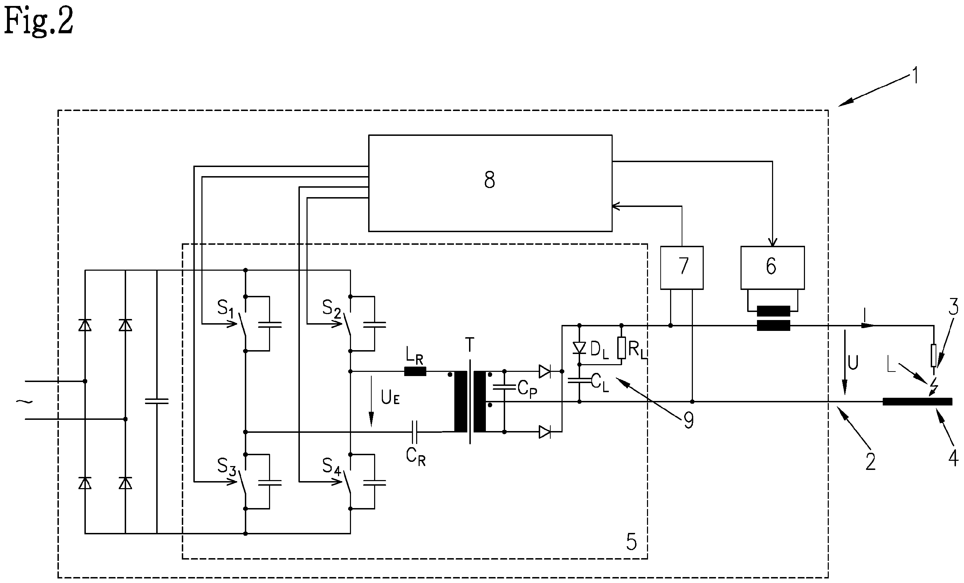

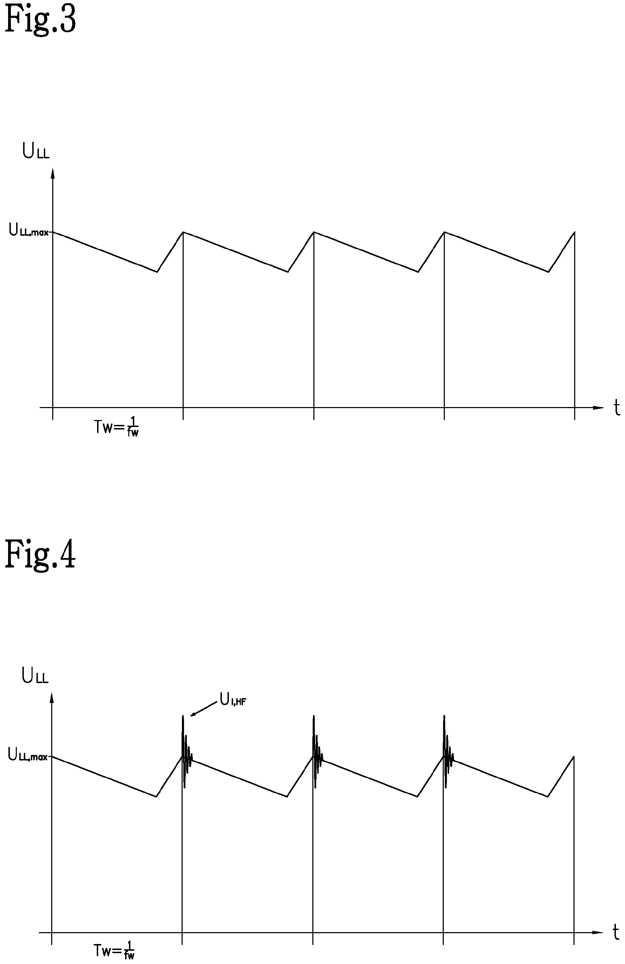

Fig. 2 zeigt eine gegenüber Fig. 1 erweiterte Blockschaltung einer erfindungsgemäßen Schweißstromquelle 1, wobei der Resonanzwandler 5 zur Erzeugung der sich periodisch ändernden Leerlaufschweißspannung U_{LL} durch einen Serien-Parallel-Resonanzkonverter mit einer Induktivität L_{R}, einer Kapazität C_{R} und einer Kapazität C_{P} gebildet ist. Weiters weist der Resonanzkonverter 5 einen Transformator T auf. Die Schalter S1, S2, S3 und S4 erzeugen am Eingang U_{E} des Resonanzkreises Spannungspulse, die den Resonanzkreis L_{R}, C_{R} und Cₚ anregen. Die parallel zu den Schaltern S1 bis S4 gezeigten Kondensatoren sind deren parasitäre Kapazitäten und haben auf den Resonanzkreis keinen Einfluss, weil sie um ein Vielfaches kleiner sind als die Kapazität C_{R}. Der dargestellte Serien-Parallel-Resonanzwandler hat außerdem die Eigenschaft, dass sich die Schweißspannung U im Leerlauf (also ohne angeschlossene Last) aufgrund des mit C_{P} gebildeten Schwingkreises derart erhöht, dass auch eine Regelung des Resonanzwandlers 5 im Leerlauf erforderlich ist. Dazu wird der Resonanzwandler 5 im Leerlauf gepulst betrieben. An dem Eingang U_{E} des Resonanzwandlers 5 werden hierzu für eine bestimmte Zeitspanne Spannungspulse angelegt. Eine Zusatzbeschaltung 9 zur Aufrechterhaltung der Leerlaufschweißspannung U_{LL}, bestehend aus der Diode D_{L}, dem Widertand R_{L} und dem Kondensator C_{L}, stellt eine Realisierungsmöglichkeit dar, um den Serien-Parallel Resonanzkonverter im Leerlauf gepulst zu betreiben. Die durch den Resonanzwandler 5 erzeugte Schwingung lädt den Glättungskondensator C_{L} über die Diode D_{L} auf der Sekundärseite auf. In der Zeit, in der keine Spannungspulse angelegt werden, entlädt sich der Glättungskondensator C_{L} über den Widerstand R_{L}. Es stellt sich am Ausgang des Resonanzwandlers 5 daher eine sich periodisch ändernde, im Wesentlichen sägezahnförmigen Leerlaufschweißspannung U_{LL} mit periodisch mit einer Wiederholfrequenz f_{w} wiederkehrenden Spannungsmaxima U_{LL},ₘₐₓ (s. Fig. 3) ein.

In Fig. 3 ist der Zeitverlauf der Leerlaufschweißspannung U_{LL} einer Schweißstromquelle 1 mit einem Resonanzkonverter dargestellt. Dementsprechend resultiert am Ausgang 2 der Schweißstromquelle 1 eine Leerlaufschweißspannung U_{LL} mit einer sich periodisch ändernden, im Wesentlichen sägezahnförmigen Leerlaufschweißspannung U_{LL} mit gemäß einer Wiederholfrequenz f_{w} wiederkehrenden Spannungsmaxima U_{LL},ₘₐₓ.

Fig. 4 zeigt den Zeitverlauf der Leerlaufschweißspannung U_{LL} bei Anwendung des erfindungsgemäßen Zündverfahrens. Dabei wird bei manchen (hier bei jedem) der auftretenden Spannungsmaxima U_{LL},ₘₐₓ im Bereich des Spannungsmaximum U_{LL},ₘₐₓ ein Hochfrequenzpuls U_{I},_{HF} überlagert. Dadurch wird die Zündung des Lichtbogens L erleichtert ohne dass die maximale durchschnittliche Spannung am Ausgang 2 der Schweißstromquelle 1 über vorgeschriebene Grenzwerte hinausgeht. Wichtig ist, dass der Energieinhalt der Hochfrequenzpulse U_{I},_{HF} über die Zeit normative Grenzwerte nicht überschreitet.

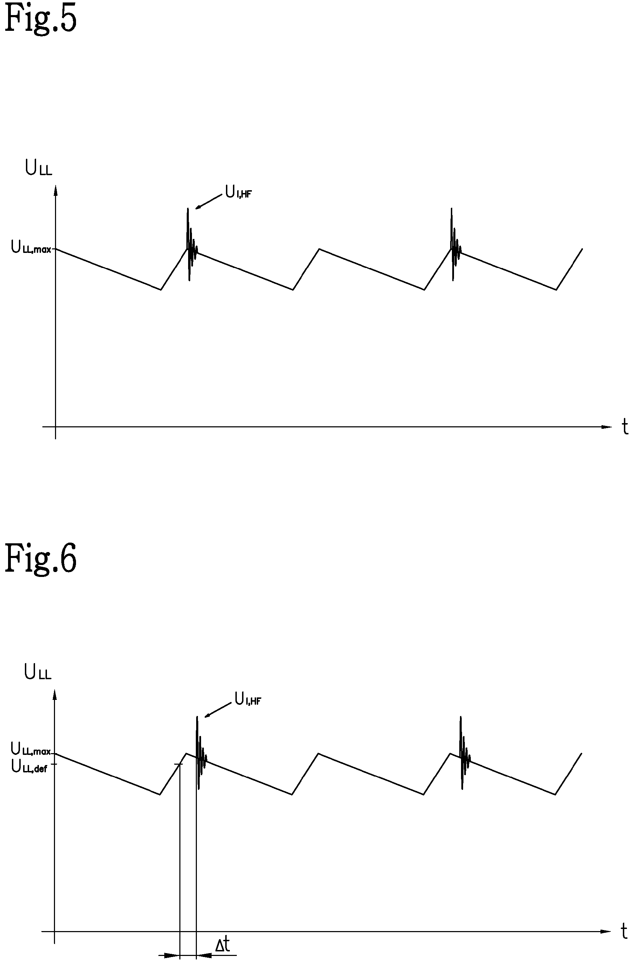

Fig. 5 zeigt den Zeitverlauf der Leerlaufschweißspannung U_{LL} am Ausgang 2 der Schweißstromquelle 1 bei einer Variante des Zündverfahrens gegenüber Fig. 3. Dementsprechend werden nur bei jedem zweiten Maximum der Leerlaufspannung U_{LL},ₘₐₓ die Hochfrequenzpulse U_{I},_{HF} überlagert. Demgemäß steht mehr Zeit für das Wiederaufladen speichernder Bauelemente der Schaltung 6 zur Erzeugung der Hochfrequenzpulse U_{I},_{HF} zur Verfügung und es wird über die Zeit eine geringere Energiemenge über den Ausgang 2 übertragen.

Fig. 6 zeigt einen Ausschnitt des zeitlichen Verlaufs der Leerlaufspannung U_{LL} am Ausgang 2 einer Schweißstromquelle 1, wobei die Leerlaufschweißspannung U_{LL} laufend gemessen wird und mit einem definierten Spannungswert U_{LL},_{def} verglichen wird. Der definierte Spannungswert U_{LL},_{def} liegt etwas unterhalb der erwarteten oder eingestellten maximalen Leerlaufschweißspannung U_{LL,max}, sodass die Detektion im Bereich des Spannungsmaximums U_{LL},ₘₐₓ sicher gewährleistet werden kann. Nach der Detektion des definierten Spannungswert U_{LL},_{def} wird zumindest in manchen Fällen ein Hochfrequenzimpuls U_{I},_{HF} überlagert, welcher die berührungslose Zündung des Lichtbogens L erleichtert bzw. ermöglicht. Die zeitliche Verschiebung zwischen dem Auftreten des definierten Spannungswerts U_{LL},_{def} und dem Zeitpunkt der Überlagerung des Hochfrequenzpulses U_{I},_{HF} erfolgt um eine vorgegebene Zeitspanne Δt versetzt, wobei die Zeitspanne Δt beispielsweise zwischen 0 und 5ms betragen kann.

## Patentansprüche

1. Verfahren zur berührungslosen Zündung eines Lichtbogens (L) zwischen einer Elektrode (3) und einem zu verschweißenden Werkstück (4) zur Durchführung eines Schweißverfahrens, wobei ein Schweißstrom (I) und eine Schweißspannung (U) an einem Ausgang (2) einer Schweißstromquelle (1) bereitgestellt werden, wobei die Schweißstromquelle (1) einen Resonanzkonverter (5) zur Erzeugung einer sich periodisch ändernden, im Wesentlichen sägezahnförmigen, Leerlaufschweißspannung (U_{LL}) mit periodisch mit einer Wiederholfrequenz (f_{w}) wiederkehrenden Spannungsmaxima (U_{LL},ₘₐₓ) beinhaltet, **dadurch gekennzeichnet, dass** der Resonanzkonverter (5) durch einen Serien-Parallel-Resonanzkonverter gebildet wird, und dass der Leerlaufschweißspannung (U_{LL}) im Bereich zumindest mancher periodisch wiederkehrender Spannungsmaxima (U_{LL},ₘₐₓ) der Leerlaufschweißspannung (U_{LL}) zeitlich synchron Hochfrequenzpulse (U_{I},_{HF}) überlagert werden.

2. Verfahren nach Anspruch 1, **dadurch gekennzeichnet, dass** der Leerlaufschweißspannung (U_{LL}) im Bereich jedes n-ten Spannungsmaximums (U_{LL,max}) der Leerlaufschweißspannung (U_{LL}) zeitlich synchron Hochfrequenzpulse (U_{I,HF}) überlagert werden, wobei n eine ganze positive Zahl größer oder gleich 1 ist.

3. Verfahren nach Anspruch 1 oder 2, **dadurch gekennzeichnet, dass** die Schweißspannung (U) gemessen wird und das Überschreiten eines vorgegebenen Spannungswerts (U_{LL},_{def}) detektiert wird, und die Hochfrequenzpulse (U_{I},_{HF}) zumindest manchen detektierten vorgegebenen Spannungswerten (U_{LL},_{def}) zeitlich synchron überlagert werden.

4. Verfahren nach einem der Ansprüche 1 bis 3, **dadurch gekennzeichnet, dass** die Hochfrequenzpulse (U_{I},_{HF}) um eine vorgegebene Zeitspanne (Δt), vorzugsweise bis 5ms, vor oder nach Auftreten des Spannungsmaximums (U_{LL},ₘₐₓ) überlagert werden.

5. Verfahren nach einem der Ansprüche 1 bis 4, **dadurch gekennzeichnet, dass** eine Leerlaufschweißspannung (U_{LL}) mit einer Wiederholfrequenz (f_{w}) zwischen 10Hz und 100Hz, insbesondere 33Hz, zur Verfügung gestellt wird.

6. Verfahren nach einem der Ansprüche 1 bis 5, **dadurch gekennzeichnet, dass** Hochfrequenzpulse (U_{I},_{HF}) mit einer Frequenz (f_{I}) zwischen 100kHz und 10MHz überlagert werden.

7. Schweißstromquelle (1) zur Bereitstellung eines Schweißstroms (I) und einer Schweißspannung (U) an einem Ausgang (2) zur Durchführung eines Schweißverfahrens mit einem Lichtbogen (L) zwischen einer Elektrode (3) und einem zu verschweißenden Werkstück (4), mit einem Resonanzkonverter (5) zur Erzeugung einer sich periodisch ändernden, im Wesentlichen sägezahnförmigen, Leerlaufschweißspannung (U_{LL}) mit periodisch mit einer Wiederholfrequenz (f_{w}) wiederkehrenden Spannungsmaxima (U_{LL,max}), **dadurch gekennzeichnet, dass** der Resonanzkonverter (5) durch einen Serien-Parallel-Resonanzkonverter gebildet ist, und dass eine Schaltung (6) zur Erzeugung von Hochfrequenzpulsen (U_{I},_{HF}) vorgesehen ist, welche Schaltung (6) zum berührungslosen Zünden des Lichtbogens (L) zur Überlagerung der Hochfrequenzpulse (U_{I},_{HF}) zu der Leerlaufschweißspannung (U_{LL}) zeitlich synchron im Bereich zumindest mancher periodisch wiederkehrender Spannungsmaxima (U_{LL},ₘₐₓ) der Leerlaufschweißspannung (U_{LL}) ausgebildet ist.

8. Schweißstromquelle (1) nach Anspruch 7, **dadurch gekennzeichnet, dass** die Schaltung (6) zur Erzeugung der Hochfrequenzpulse (U_{I},_{HF}) zur zeitlich synchronen Überlagerung der Hochfrequenzpulse (U_{I},_{HF}) der Leerlaufschweißspannung (U_{LL}) im Bereich jedes n-ten Spannungsmaximums (U_{LL},ₘₐₓ) der Leerlaufschweißspannung (U_{LL}) ausgebildet ist, wobei n eine ganze positive Zahl größer oder gleich 1 ist.

9. Schweißstromquelle (1) nach Anspruch 7 oder 8, **dadurch gekennzeichnet, dass** eine Messeinrichtung (7) zur Detektion der Schweißspannung (U) vorgesehen ist, welche Messeinrichtung (7) über eine Regelungseinrichtung (8) mit der Schaltung (6) zur Erzeugung der Hochfrequenzpulse (U_{I},_{HF}) verbunden ist, sodass die Hochfrequenzpulse (U_{I},_{HF}) zeitlich synchron mit detektierten definierten Spannungswerten (U_{LL},_{def}) überlagerbar sind.

10. Schweißstromquelle (1) nach einem der Ansprüche 7 bis 9, **dadurch gekennzeichnet, dass** die Schaltung (6) zur Erzeugung der Hochfrequenzpulse (U_{I},_{HF}) zur zeitlich um eine vorgegebene Zeitspanne (Δt), vorzugsweise bis 5ms, vor oder nach Auftreten des Spannungsmaximums (U_{LL},ₘₐₓ) versetzten Überlagerung der Hochfrequenzpulse (U_{I},_{HF}) ausgebildet ist.

11. Schweißstromquelle (1) nach einem der Ansprüche 7 bis 10, **dadurch gekennzeichnet, dass** der Resonanzkonverter (5) zur Erzeugung der sich periodisch ändernden Leerlaufspannung (U_{LL}) mit einer Wiederholfrequenz (f_{w}) zwischen 10Hz und 100Hz, insbesondere 33Hz, ausgebildet ist.

12. Schweißstromquelle (1) nach einem der Ansprüche 7 bis 11, **dadurch gekennzeichnet, dass** die Schaltung (6) zur Erzeugung von Hochfrequenzpulsen (U_{I},_{HF}) zwischen 100kHz und 10MHz ausgebildet ist.

13. Schweißstromquelle (1) nach einem der Ansprüche 7 bis 12, **dadurch gekennzeichnet, dass** die Elektrode (3) durch eine nichtabschmelzende Elektrode, insbesondere Wolframelektrode, gebildet ist.

## Claims

1. Method for contactless ignition of an arc (L) between an electrode (3) and a workpiece (4) to be welded in order to carry out a welding method, a welding current (I) and a welding voltage (U) being provided at an output (2) of a welding power source (1),the welding power source (1) containing a resonant converter (5) for generating a periodically changing, substantially sawtooth-shaped open-circuit welding voltage (U_{LL}) having voltage maxima (U_{LL},ₘₐₓ) that recur periodically with a repetition frequency (fw), **characterised in that** the resonant converter (5) is formed by a series-parallel resonant converter, and **in that** high-frequency pulses (U_{I},_{HF}) are superimposed on the open-circuit welding voltage (U_{LL}) in the region of at least some periodically recurring voltage maxima (U_{LL},ₘₐₓ) of the open-circuit welding voltage (U_{LL}) in a temporally synchronous manner.

2. Method according to claim 1, **characterised in that** high-frequency pulses (U_{I},_{HF}) are superimposed on the open-circuit welding voltage (U_{LL}) in the region of every nth voltage maximum (U_{LL},ₘₐₓ) of the open-circuit welding voltage (U_{LL}) in a temporally synchronous manner, n being a positive integer greater than or equal to 1.

3. Method according to either claim 1 or claim 2, **characterised in that** the welding voltage (U) is measured and the exceeding of a predetermined voltage value (U_{LL},_{def}) is detected, and the high-frequency pulses (U_{I},_{HF}) are superimposed on at least some detected predetermined voltage values (U_{LL},_{def}) in a temporally synchronous manner.

4. Method according to any of claims 1 to 3, **characterised in that** the high-frequency pulses (U_{I},_{HF}) are superimposed by a predetermined period of time (Δt), preferably up to 5 ms, before or after the voltage maximum (U_{LL},ₘₐₓ) occurs.

5. Method according to any of claims 1 to 4, **characterised in that** an open-circuit welding voltage (U_{LL}) with a repetition frequency (f_{w}) of between 10 Hz and 100 Hz, in particular 33 Hz, is made available.

6. Method according to any of claims 1 to 5, **characterised in that** high-frequency pulses (U_{I},_{HF}) with a frequency (f_{I}) of between 100 kHz and 10 MHz are superimposed.

7. Welding power source (1) for providing a welding current (I) and a welding voltage (U) at an output (2) in order to carry out a welding process with an arc (L) between an electrode (3) and a workpiece (4) to be welded, having a resonant converter (5) for generating a periodically changing, substantially sawtooth-shaped, open-circuit welding voltage (U_{LL}) having voltage maxima (U_{LL},ₘₐₓ) that recur periodically with a repetition frequency (fw), **characterised in that** the resonant converter (5) is formed by a series-parallel resonant converter, and **in that** a circuit (6) is provided for generating high-frequency pulses (U_{I,HF}), which circuit (6) is designed for contactless ignition of the arc (L) for superimposing the high-frequency pulses (U_{I},_{HF}) on the open-circuit welding voltage (U_{LL}) in the region of at least some periodically recurring voltage maxima (U_{LL},ₘₐₓ) of the open-circuit welding voltage (U_{LL}) in a temporally synchronous manner.

8. Welding power source (1) according to claim 7, **characterised in that** the circuit (6) for generating the high-frequency pulses (U_{I},_{HF}) is designed for superimposing the high-frequency pulses (U_{I},_{HF}) on the open-circuit welding voltage (U_{LL}) in the region of every nth voltage maximum (U_{LL},ₘₐₓ) of the open-circuit welding voltage (U_{LL}) in a temporally synchronous manner, n being a positive integer greater than or equal to 1.

9. Welding power source (1) according to either claim 7 or claim 8, **characterised in that** a measuring device (7) is provided for detecting the welding voltage (U), which measuring device (7) is connected to the circuit (6) for generating the high-frequency pulses (U_{I},_{HF}) via a control device (8), so that the high-frequency pulses (U_{I},_{HF}) can be superimposed on detected defined voltage values (U_{LL},_{def}) in a temporally synchronous manner.

10. Welding power source (1) according to any of claims 7 to 9, **characterised in that** the circuit (6) for generating the high-frequency pulses (U_{I}, _{HF}) is designed for superimposing the high-frequency pulses (U_{I}, _{HF}) in a manner that is temporally offset by a predetermined period of time (Δt), preferably up to 5 ms, before or after the voltage maximum (U_{LL}, ₘₐₓ) occurs.

11. Welding power source (1) according to any of claims 7 to 10, **characterised in that** the resonant converter (5) is designed for generating the periodically changing open-circuit voltage (U_{LL}) with a repetition frequency (f_{w}) of between 10 Hz and 100 Hz, in particular 33 Hz.

12. Welding power source (1) according to any of claims 7 to 11, **characterised in that** the circuit (6) is designed for generating high-frequency pulses (U_{I},_{HF}) between 100 kHz and 10 MHz.

13. Welding power source (1) according to any of claims 7 to 12, **characterised in that** the electrode (3) is formed by a non-consumable electrode, in particular a tungsten electrode.

## Revendications

1. Procédé d'amorçage sans contact d'un arc électrique (L) entre une électrode (3) et une pièce (4) à souder pour la mise en oeuvre d'un procédé de soudage, où un courant de soudage (I) et une tension de soudage (U) sont fournis à une sortie (2) d'une source de courant de soudage (1), où la source de courant de soudage (1) contient un convertisseur de résonance (5) pour produire une tension de soudage en circuit ouvert (U_{LL}) sensiblement en forme de dents de scie, changeant périodiquement, avec des maxima de tension (U_{LL}, ₘₐₓ) périodiquement récurrents à une fréquence de répétition (f_{w}), **caractérisé en ce que** le convertisseur de résonance (5) est formé par un convertisseur de résonance série-parallèle, et **en ce que** des impulsions haute fréquence (U_{I}, _{HF}) sont superposées de manière synchrone dans le temps à la tension de soudage en circuit ouvert (U_{LL}) dans le domaine d'au moins certains maxima de tension (U_{LL}, ₘₐₓ) périodiquement récurrents de la tension de soudage en circuit ouvert ( U_{LL}).

2. Procédé selon la revendication 1, **caractérisé en ce que** des impulsions haute fréquence (U_{I, HF}) sont superposées de manière synchrone dans le temps à la tension de soudage en circuit ouvert (U_{LL}) dans le domaine de chaque nième maximum de tension (U_{LL}, ₘₐₓ) de la tension de soudage en circuit ouvert (U_{LL}), où n est un nombre entier positif supérieur ou égal à 1.

3. Procédé selon la revendication 1 ou 2, **caractérisé en ce que** la tension de soudage (U) est mesurée et le dépassement d'une valeur de tension prédéterminée (U_{LL}, _{def}) est détecté, et les impulsions haute fréquence (U_{I}, _{HF}) sont superposées de manière synchrone dans le temps à au moins certaines valeurs de tension prédéterminées (ULL_{, def}) détectées.

4. Procédé selon l'une des revendications 1 à 3, **caractérisé en ce que** les impulsions haute fréquence (U_{I}, _{HF}) sont superposées d'une durée prédéterminée (Δt), de préférence jusqu'à 5 ms, avant ou après la survenue du maximum de tension (U_{LL, max}).

5. Procédé selon l'une des revendications 1 à 4, **caractérisé en ce qu'**il est mis à disposition une tension de soudage en circuit ouvert (U_{LL}) avec une fréquence de répétition (f_{w}) entre 10 Hz et 100 Hz, en particulier 33 Hz.

6. Procédé selon l'une des revendications 1 à 5, **caractérisé en ce que** des impulsions haute fréquence (U_{I}, _{HF}) avec une fréquence (f_{I}) entre 100 kHz et 10 MHz sont superposées.

7. Source de courant de soudage (1) pour fournir un courant de soudage (I) et une tension de soudage (U) à une sortie (2) pour la mise en oeuvre d'un procédé de soudage avec un arc électrique (L) entre une électrode (3) et une pièce à souder (4), avec un convertisseur de résonance (5) pour produire une tension de soudage en circuit ouvert (U_{LL}) sensiblement en forme de dents de scie, changeant périodiquement, avec des maxima de tension (U_{LL}, ₘₐₓ) périodiquement récurrents avec une fréquence de répétition (f_{w}), **caractérisée en ce que** le convertisseur de résonance (5) est formé par un convertisseur de résonance série-parallèle, et **en ce qu'**un circuit (6) pour produire des impulsions haute fréquence (U_{I}, _{HF}) est prévu, lequel circuit (6) est conçu pour l'amorçage sans contact de l'arc électrique (L) pour la superposition des impulsions haute fréquence (U_{I}, _{HF}) à la tension de soudage en circuit ouvert (U_{LL}) de manière synchrone dans le temps dans le domaine d'au moins certains maxima de tension (U_{LL}, ₘₐₓ) périodiquement récurrents de la tension de soudage en circuit ouvert (U_{LL}).

8. Source de courant de soudage (1) selon la revendication 7, **caractérisée en ce que** le circuit (6) pour produire les impulsions haute fréquence (U_{I}, _{HF}) est conçu pour la superposition synchrone dans le temps des impulsions haute fréquence (U_{I}, _{HF}) à la tension de soudage en circuit ouvert (U_{LL}) dans le domaine de chaque nième maximum de tension (U_{LL}, ₘₐₓ) de la tension de soudage en circuit ouvert (U_{LL}), où n est un nombre entier positif supérieur ou égal à 1.

9. Source de courant de soudage (1) selon la revendication 7 ou 8, **caractérisée en ce qu'**un dispositif de mesure (7) pour la détection de la tension de soudage (U) est prévu, lequel dispositif de mesure (7) est relié via un dispositif de régulation (8) avec le circuit (6) pour produire les impulsions haute fréquence (U_{I}, _{HF}), de sorte que les impulsions haute fréquence (U_{I}, _{HF}) peuvent être superposées de manière synchrone dans le temps avec des valeurs de tension définies (U_{LL}, _{def}) détectées.

10. Source de courant de soudage (1) selon l'une des revendications 7 à 9, **caractérisée en ce que** le circuit (6) pour produire les impulsions haute fréquence (U_{I}, _{HF}) est conçu pour la superposition des impulsions haute fréquence (U_{I}, _{HF}) décalée dans le temps d'une durée prédéterminée (Δt), de préférence jusqu'à 5 ms, avant ou après la survenue du maximum de tension (U_{LL}, ₘₐₓ).

11. Source de courant de soudage (1) selon l'une des revendications 7 à 10, **caractérisée en ce que** le convertisseur de résonance (5) est conçu pour produire la tension en circuit ouvert (U_{LL}) changeant périodiquement avec une fréquence de répétition (f_{w}) entre 10 Hz et 100 Hz, en particulier 33 Hz.

12. Source de courant de soudage (1) selon l'une des revendications 7 à 11, **caractérisée en ce que** le circuit (6) est conçu pour produire des impulsions haute fréquence (U_{I}, _{HF}) entre 100 kHz et 10 MHz.

13. Source de courant de soudage (1) selon l'une des revendications 7 à 12, **caractérisée en ce que** l'électrode (3) est formée par une électrode non consommable, en particulier une électrode en tungstène.
